Europäisches Patentamt

European Patent Office

Office européen des brevets

(11) Publication number : **0 370 807 B1**

# EUROPEAN PATENT SPECIFICATION

(45) Date of publication of patent specification :
**27.05.92 Bulletin 92/22**

(51) Int. Cl.⁵ : **F02D 41/02, G01N 21/43**

(21) Application number : **89312161.6**

(22) Date of filing : **23.11.89**

(54) **A liquid mixture ratio detector device.**

(30) Priority : **23.11.88 JP 295478/88**
**20.02.89 JP 40008/89**

(43) Date of publication of application :
**30.05.90 Bulletin 90/22**

(45) Publication of the grant of the patent :
**27.05.92 Bulletin 92/22**

(84) Designated Contracting States :
**DE GB NL**

(56) References cited :
**EP-A- 0 281 337**
**DE-A- 2 224 310**
**US-A- 3 746 450**

(56) References cited :
**PATENT ABSTRACTS OF JAPAN vol. 10, no.**
**157 (P-464) 06 June 1986, & JP-A-61 011636**
**PATENT ABSTRACTS OF JAPAN vol. 11, no.**
**345 (P-636) 12 November 1987, & JP-A-62**
**127647**

(73) Proprietor : **NGK SPARK PLUG CO., LTD**
**14-ban, 18-gou Takatsuji-cho Mizuho-Ku**
**Nagoya-shi (JP)**

(72) Inventor : **Shigeru, Miyata**
**14-ban, 18-gou Takatsuji-cho Mizuho-ku**
**Nagoya-shi (JP)**
Inventor : **Kiyotaka, Ohno**
**14-ban,18-gou Takatsuji-cho Mizuho-ku**
**Nagoya-shi (JP)**

(74) Representative : **Senior, Alan Murray et al**
**J.A. KEMP & CO 14 South Square Gray's Inn**
**London WC1R 5EU (GB)**

## Description

This invention relates to a liquid mixing sensor which optically detects the mixing ratio of a liquid mixture which includes at least two liquid components.

In internal combusion engines, mixtures of gasoline and alcohol have been employed as substitutes for gasoline.

These substitute fuels necessitate the provision of a detector device which continuously or quasi-continuously detects the mixing ratio of gasoline and alcohol to obtain an appropriate air-fuel ratio and ignition timing.

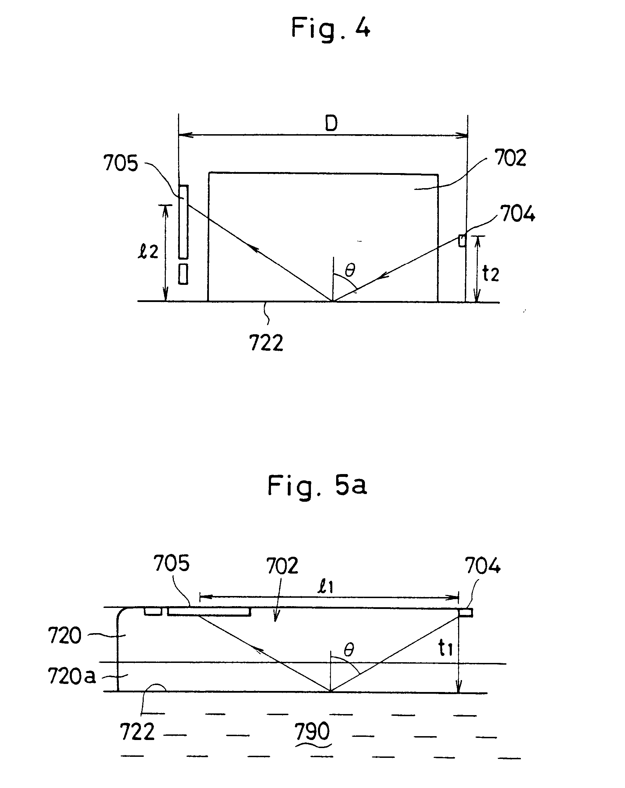

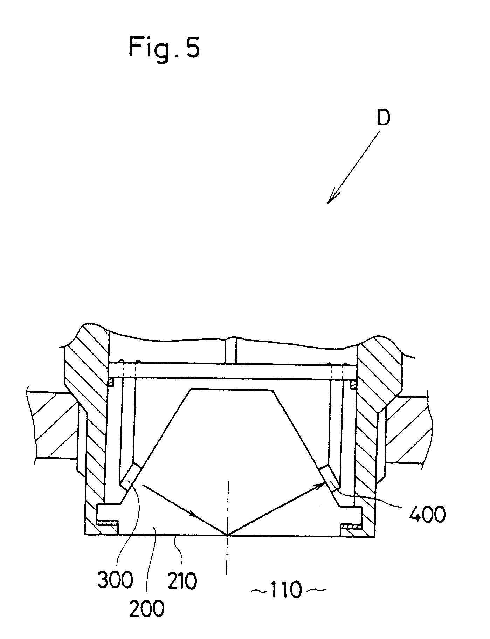

As seen in Fig. 5a, a prior art detector device has an optically permeable member 720a, a bottom surface 722 of which is brought in contact with a liquid mixture 790 composed of gasoline and alochol.

The member 702a is enclosed in a casing filled with an epoxy mould resin 720 to form an optically permeable column 702. A LED 704 and a photo diode 705 are embedded into the epoxy mould resin 720 in parallel overlying relationship to the bottom surface 722.

Some of the light beams from the LED 704 are incident on the bottom surface 722 at more than a critical angle, and undergo total internal reflection from the bottom surface 722 so as to impinge on the photo diode 705 which produces an output according to the intensity of the light beams impinging thereon.

In this device, however, the light receiving area of the photo diode has to increase to account for a greater angle of incidence on the column 702, or else it is necessary to choose a greater distance between the photo diode 705 and and the LED 704, which causes the scale of the device to be greater.

In addition, since it is necessary that the photo diode 705 and the LED 704 be located in the mould resin 720, it is difficult to mould resin which has optimal characteristics for all relevant factors such as adhesion, expansion, refraction, transparency and endurance.

Therefore, it is an object of the invention to provide a detector device which has a long service life with low costs of manufacture, small size and high precision.

Further, another example of a prior detector device (D) is shown in Fig. 5.

This device carries a trapezoidal prism 200 disposed to have a boundary with a fuel mixture 110. A LED 300 and a photo diode 400 are placed on either side of the prism 200.

However, the detector device (D) has the following drawbacks.

The trapezoidal prism is costly with insufficient compensation which is required due to temperature effects and deterioration of the LED, thus leading to loss of precision.

Even recently introduced detector devices have the following drawbacks:

The height of the optical permeable column is great causing the device to be heavy. The light receiving area of the photo diode is great because a broad range is required for the light beams to impinge on the photo diode.

Therefore, the invention has its object to provide a liquid mixture ratio detector device which is capable of reducing the drawbacks mentioned above, which accurately detects the mixing ratio with a lightweight column and small-scale light receiving elements because light receiving and light emitting diodes are disposed in a gel-like filler.

DE - 2224310 teaches the use of a glass column and detectors and emitters placed about the column to detect the a liquid mixture ratio. The pre-characterising portion of the claim has been based on this disclosure.

According to the invention there is provided a liquid mixture ratio detector comprising:

an optically permeable column, having a bottom surface which in use is in contact with a liquid, and forms a boundary between the liquid and the bottom surface of the column;

light emitting and light receiving elements disposed about the column such that in use optical paths are formed from the light emitting element, passing into the column, onto the boundary, out of the column and to the light receiving element, which produces an output according to the intensity of the light beams impinging thereon; characterised in that

the light emitting area of the light emitting element and the light receiving area of the light receiving element are substantially perpendicular to the boundary.

Preferably, the light receiving and light emitting elements are disposed to opposite sides of the column.

Advantageously, the light beams reflected by the boundary pass through the column and leave the column partly from the side of the column, and partly from the upper surface of the column.

Further, a transparent filler may be disposed to fill between the light emitting element and the column, and also between the light receiving element and the column, the refractive index of the filler being chosen in relation to that of the column.

Preferably, the transparent liquid filler has a lower refractive index than the column while all the light beams incident on the boundary at more than a critical angle are adapted to come out from the other side of the column.

With this arrangement it is unnecessary to make all the light beams reflected by the boundary come out from the side of the column, thus allowing the axial dimension of the column to be reduced.

Alternatively the filler may be chosen to have a lower refractive index than the column, thus controlling dispersion of the light beams which impinge on the light receiving element.

The column may be adapted so that light reflected from the boundary leaves the column only by its side and not its top in order to prevent internal reflection from the top of the column.

The invention will be further described by way of non-limitative examples with reference to the accompanying drawings in which:

Fig. 1 is a cross sectional view of a liquid mixture ratio detector device according to a first embodiment of the invention;

Fig. 2 is a perspective view of an alternative form of column;

Fig. 3 is a perspective view of another alternative form of column;

Fig. 4 is a schematic view depicted for the purpose of explaining operation;

Fig. 5 is a view of a prior art detector device;

Fig. 5a is a schematic view of an other prior art detector device depicted for the purpose of comparing it to the device according to the present invention;

Fig. 6 is a cross-sectional view of a mixing liquid ratio detector device according to a second embodiment of the invention;

Fig. 7 is a cross-sectional view of the detector device of Fig. 6 with optical path depicted;

Fig. 8 is an explanatory view for showing how the light beams refract at the corner of the column; and

Fig. 9 is a view similar to Fig. 6 according to a third embodiment of the invention.

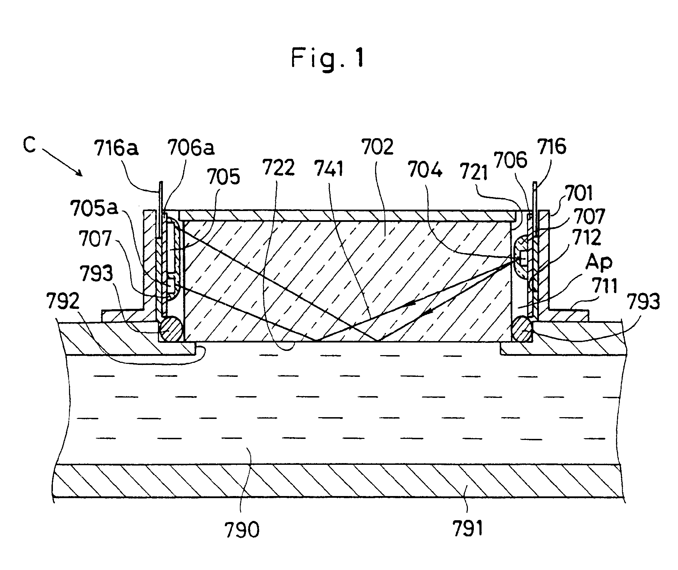

Now a first embodiment of the invention is described with reference to Fig. 1.

A detector device (C) is installed at an opening 792 provided in a pipe 791 through which a liquid fuel mixture 790 of gasoline and alcohol flows. The liquid fuel mixture 790 may be combination of gasoline with ethanol, butanol, methanol or a more highly polymerized alcohol.

Alternatively, the combination may be alcohol and kerosene. Around the periphery of the opening 792, a cylindrical holder 701 is attached which has a lid at its upper open end, and at the same time, has a flange 711 fixed to the pipe 791.

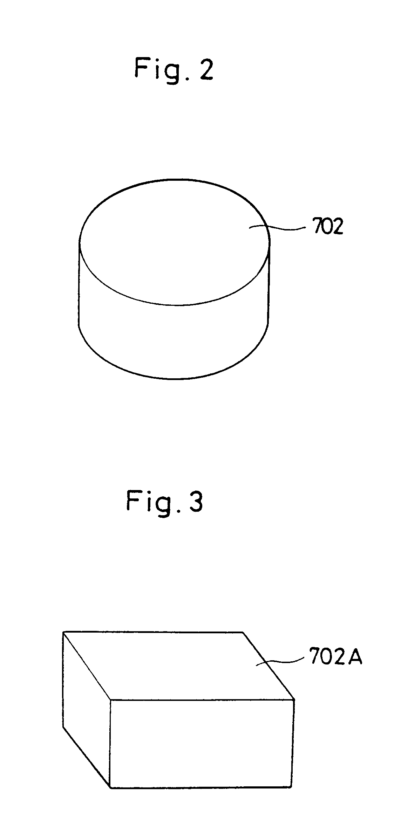

Into the holder 701, a glass column or plate 702 is inserted and the holder rendered impermeable by means of O-ring 793. The lower surface 722 of the column contacts the liquid fuel mixture 790. In this instance, the glass column 702 is in contact with the lower face of the upper lid of the holder 701. The glass column 702 is made of flint glass and is cylindrical as seen in Fig. 2, and has a refractive index of 1.55. The column may be rectangular as seen at 702A in Fig. 3.

Between the column 702 and an inner surface 712 of the holder 701, an annular space (Ap) is provided into which base plates 706, 706a are located in opposed relationship with the column 702 interposed therebetween. The base plate 706 has a light emitting diode 704, and base plate 706a a photo diode 705 together with a compensation diode; all three diodes are coated with silicone resin 707. Both light emission and light receiving areas of the three diodes 705, 705a, 704 are perpendicular to the boundary between the lower face of the column and the liquid fuel mixture 790. The light emitting diode 704 is of Ga-As type, and emits infrared rays 741 when energized. The infrared rays 741 enter the column 702 through the annular space (Ap). The rays 741 incident on the bottom 722 at more than a critical angle are totally internally reflected from the boundary and come out of the column 702.

The rays 741 impinge on the photo diode 705 which produces an output representative of the intensity of the rays 741 impinging thereon.

The amount of rays 741 impinging on the photo diode 705 changes in accordance with the critical angle at which the rays 741 are reflected from the boundary 722. The output of the diode allows a combustion control device to determine the most appropriate ignition timing and air to fuel ratio. Upright members 716a, are terminal electrodes for output or input.

With the structure thus far described, it is possible to provide a compact and endurable detector device (C) with low cost, but high detecting precision.

The prior art device of Fig. 5a will be compared with the schematic view in Fig. 4 of the first embodiment of the invention.

In Fig. 5a a dimensional relationship between $(v_1)$, $(\theta)$ and $(t_1)$ may be expressed as follows:

$l_1 = 2t_1 \tan \theta$; $l_1 = 3.46t_1$ when incident angle $(\theta)$ is 60 degrees. Where $(l_1)$ represents the intended distance between the two diodes, while $(t_1)$ represents the vertical distance between the boundary and the light emitting diode (photo diode).

A differential equation $dl_1 / dt_1 = 3.46$ is obtained from the equation $l_1 = 3.46t_1$.

Therefore, a dimensional inaccuracy in $(t_1)$ affects the dimension of $(l_1)$ by a factor of 3.46 which requires the light receiving area of the photo diode to be broad in order to absorb the dimensional error of $(t_1)$.

In Fig. 4 $\tan \theta = D/(l_2 + t_2)$ and therefore $(l_2) = 0.557D - t_2$ when incident angle $(\theta)$ is 60 degrees, where (D) represents a distance between two diodes, while $(l_2)$ and $(t_2)$ in turn represent a distance between the point at which rays 741 impinge on the photo diode and the boundary, and a distance between the light emitting diode and the boundary. It can be inferred from the latter equation that the dimensional accuracy of $(l_2)$ is less dependent on those of $(t_2)$ and (D).

Light emitting and light receiving areas of the light emitting diode and photo diode are arranged to be perpendicular to the boundary (722), so that the angle of incidence on the side wall of the column becomes small e.g. 30° even when the critical angle of incidence on the boundaray 722 is somewhat greater e.g. 60°.

The angle of refraction as the rays 741 leave the column becomes small in the case above. This eliminates the need for a transparent filler between the light emitting photo diode and the wall of the column.

It is noted that the column may be liquid-tightly sealed by means of a plate packing instead of O-ring.

On the opposite surface from the outer bottom 722, the upper surface of the column may have an undulating heat transfer portion.

It is further noted that space between the light emitting diode and the column wall may be filled with silicone or epoxy resin to prevent the surface of the diode from being fouled. In this instance, space between the photo sensitive diode and the circumferential wall may be filled with silicone or epoxy resin for the same purpose. This arrangement works to prevent the optical path from being significantly diverted even when the circumferential wall of the column is not smooth.

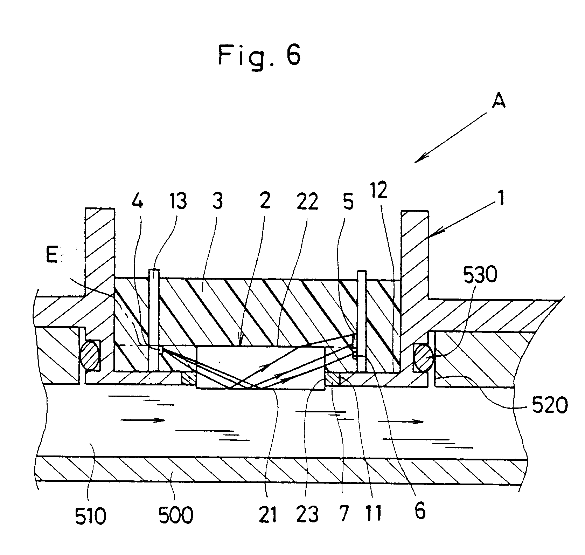

Fig. 6 shows a second embodiment according to the invention which comprises a metallic holder 1 having a circular aperture 11 at its bottom. The device (A) further comprises a glass column 2 inserted into the aperture 11, a silicon-gel 3 applied to the holder 1, and a light emitting diode 4, a photo diode 5 together with a compensation photo diode 6 each disposed in the silicone-gel 3. A glass ring 7 is provided to bond the glass column 2 to the holder 1. O-ring 530 seals a passage between pipe 500 and the holder 1.

The device (A) is installed on the pipe 500 through an opening 520 across which a liquid fuel mixture of gasoline and alcohol 510 (refractive index: 1.33-1.43) flows. The holder 1 is made of stainless steel. An annular space is provided between an end of the aperture 11 and an outer surface of the glass column 2 for securing the glass ring 7. On the upper surface 12 of the holder 1, a hollow cylinder 13 of synthetic resin is provided to surround the glass column 2 which is made of flint glass (refracting index: 1.58), and measures 8mm in diameter, and 2.5 mm in length (height).

The column 2 has lower surface 21 which is immersed in the liquid fuel mixture of gasoline and alcohol 510 to form a boundary 21, has an upper surface 22 and a circumference 23 around which is provided the glass ring 7.

The silicone-gel 3 serves as transparent filler and has a refractive index of 1.40, and extends to the upper open end of the cylinder 13. A light emitting diode 4 (LED) is attached to an inner wall of the cylinder 13, and its upper extent falls somewhat below an extension line (E) of the upper surface 22 of the column 2.

The photo-sensitive diode 5 is attached to the inner wall of the cylinder 13 so as to oppose the light emitting diode 4 beyond the glass column 2 and its upper and lower extents straddle the extension line (E).

The compensation photo diode 6 is installed on the inner wall of the cylinder 13 directly below the photo diode 5.

The glass ring 7 is made of flint glass having height of 1 mm, and thickness of 1 mm. The melting point of the glass ring 7 is lower than that of the glass column 2. The glass ring 7 supports the glass column 2 to maintain the outer bottom (boundary) 21 immersed in the liquid fuel mixture of gasoline and alcohol 510.

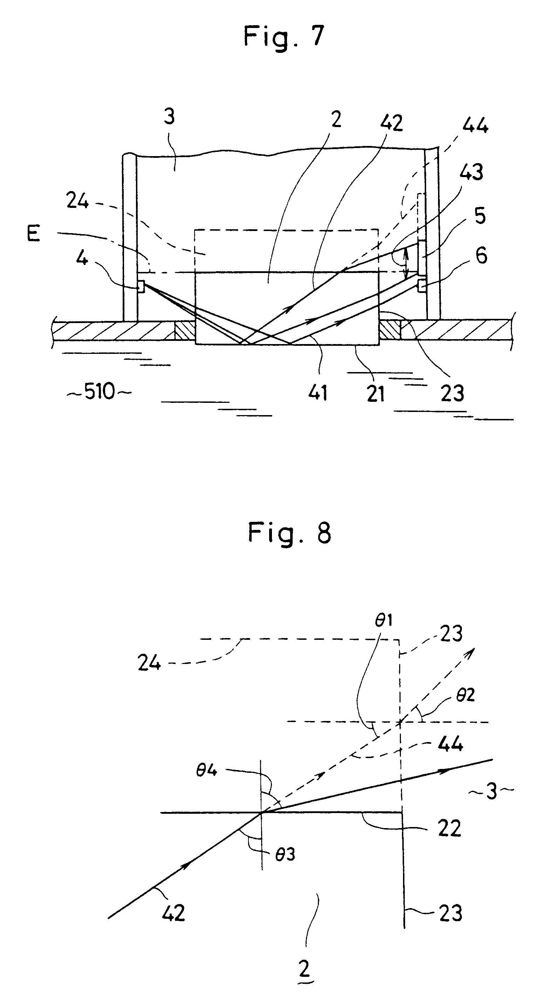

The height and diameter dimensions of the column 2, and the vertical position of photo diode 5 are determined such that light beams from the light emitting diode 4 enter into one side of the column 2 through the transparent liquid filler (silicone-gel) 3 to be incident on the boundary 21. The light beams incident on the boundary at an angle more than a critical angle are totally reflected from the boundary 21, and advance through the column 2 to leave partly from the other side of the column 2 as seen at an optical path 41 in Fig. 7, and partly coming out from an upper surface 22 of the column 2 through the silicone gel 3 as seen at an optical path 42 to impinge on the photo diode 5 so as to produce an output according to the light beams impinging thereon.

It is noted that a vertical range as designated at 43 is variable corresponding to upper and lower limits of alcohol content in the liquid fuel mixture 510. A change of the mixing ratio of the liquid fuel mixture 510 causes the critical angle to increase so that the upper extent of the spread of beams impinging on photo sensitive diode 5 moves upwards.

Fig. 8 shows how the optical refraction occurs at the upper surface 22.

Since the refractive index of the glass column 2 is chosen to be greater than that of the silicone-gel 3, the light beams from the light emitting diode 4 are shown by the solid-lined optical path 42 when the incident angle ($\theta 3$) is smaller than the refraction angle ($\theta 4$). When the light beams come out of the column wall 23 to enter the silicone-gel 3, the relationship between the incident angle and the refraction angle is expressed by an inequality ($\theta 1$) < ($\theta 2$) as seen at broken lines 44.

In cases in which it is necessary to let the light beams on path 42 come out of the wall 23 into the silicone-gel 3, the height of the column 2 is required to reach a level as seen at broken lines 24 in Figs. 7 and 8.

The detector device according to the present invention has the following advantages.

The glass column 2 is only required to be at least as high as is depicted by the solid line in Fig. 7 and 8, thus making it possible to provide a compact and light weight detector device (A).

The light weight of the glass column 2 serves to assist in retaining the column bonded to the metallic holder 1.

The solid-lined optical path 42 makes it possible to prevent the light beams from dispersing broadly, thus enabling the light receiving area of the photo diode to be relatively small leading to a compact diode at low cost.

This effect is all the more enhanced as the difference in refractive indices between the silicone-gel 3 and the glass column 2 becomes greater.

It is possible to make the height of the glass column 2 small so that the thermal stress from the glass ring 7 due to temperature change becomes minor so as to prevent cracks from occurring on the column 2.

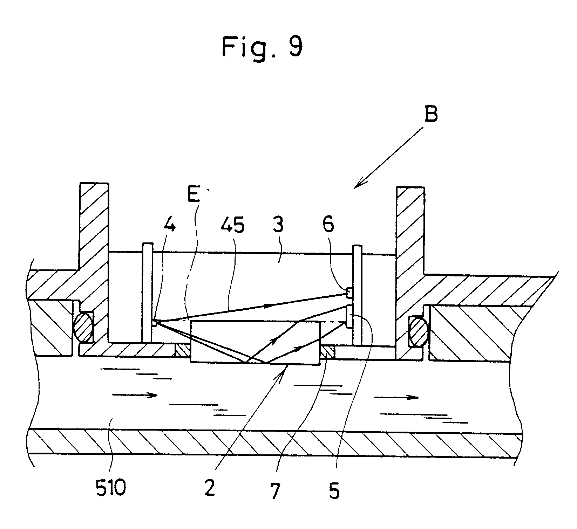

Fig. 9 shows a third embodiment of the invention. In a detector device (B) according to this embodiment, the compensation photo diode 6 is located somewhat above the photo diode 5. Some of the light beams from the light emitting diode pass directly through the silicone-gel 3 to impinge on the photo diode 5 without advancing into the glass column 2, as shown by optical path 45. This arrangement allows the light intensity of the light emitting diode to be monitored regardless of whether the mixing ratio of gasoline and alcohol changes.

Further, this arrangement allows the prevention of light beams 45 from being occluded by the glass ring 7. The arrangement of the compensation photo diode 6 is substantially immune to the critical angle depending on the mixing ratio of gasoline and alcohol 510, thus the positioning the compensation photo diode 6 is not critical.

It is appreciated that the mixing liquid to be detected may be mobile or stationary.

Further, it is noted that the column may have the property that it resists erosion of the mixing liquid to be detected and may be of sodium glass, Pyrex glass, borosilicate glass or acryl synthetic resin.

Furthermore, it is noted that the glass column plate may be polygonal or elliptic.

It is also appreciated that the critical angle of incidence on the boundary may preferably by chosen to be more than 45 degrees for the sake of ready installation of the light emitting diode and the photo diode.

## Claims

1. A liquid mixture ratio detector comprising:

an optically permeable column, having a bottom surface which in use is in contact with a liquid, and forms a boundary between the liquid and the bottom surface of the column;

light emitting and light receiving elements disposed about the column such that in use optical paths are formed from the light emitting element, passing into the column, onto the boundary, out of the column and to the light receiving element, which produces an output according to the intensity of the light beams impinging thereon; characterised in that the light emitting area of the light emitting element and the light receiving area of the light receiving element are substantially perpendicular to the boundary.

2. A liquid mixture ratio detector according to claim 1 wherein the light receiving and light emitting elements are disposed to opposite sides of the column.

3. A liquid mixture ratio detector according to claim 1 or 2 wherein in use the light beams reflected by the boundary pass through the column and leave the column partly from the side of the column, and partly from the upper surface of the column.

4. A liquid mixture ratio detector according to claim 1, 2 or 3 wherein a transparent filler is disposed to fill between the light emitting element and the column, and also between the light receiving element and the column, the refractive index of the filler being chosen in relation to that of the column.

5. A liquid mixture ratio detector according to any of the preceding claims further comprising: a transparent filler disposed to fill between the light emitting element and the column, and at the same time, filling between the light receiving element and the column; the height and diameter dimensions of the column, and vertical position of the light receiving element being chosen such that light beams from the light emitting element enter one side of the column through the transparent filler to be incident on the boundary, the light beams incident on the boundary at an angle more than a critical angle being totally reflected by the boundary advancing through the column so as to come out partly from the other side of the column, and partly from an upper surface of the column to impinge on the light receiving element so as to produce an output according to the intensity of the light beams impinging thereon.

6. A liquid mixture ratio detector according to claim 5, the transparent liquid filler having a lower refractive index than the column while all the light beams incident on the boundary at more than a critical angle are adapted to come out from the other side of the column.

7. A liquid mixture ratio detector according to claim 5 or 6 including a holder for supporting the column.

## Patentansprüche

1. Detektor zur Bestimmung des Mischungsverhältnis einer Flüssigkeitsmischung mit

einer optisch durchsichtigen Säule mit einer Bodenfläche, die bei der Messung die Flüssigkeit berührt und eine Grenzfläche zwischen der Flüssigkeit und der Bodenfläche der Säule bildet,

lichtemittierenden und lichtaufnehmenden Elementen, die so um die Säule herum angeordnet sind, daß bei der Messung Strahlengänge von den lichtemittierenden Elementen in die Säule hinein, auf die Grenzfläche, aus der Säule heraus und zu dem lichtaufnehmenden Element hin gebildet werden, welches eine Ausgangsleistung entsprechend der Intensität der darauf auftreffenden Lichtstrahlen erzeugt, dadurch gekennzeichnet, daß die lichtemittierende Fläche des lichtemittierenden Elements und die lichtaufnehmende Fläche des lichtaufnehmenden Elements im wesentlichen senkrecht zu der Grenzfläche verlaufen.

2. Detektor nach Anspruch 1, bei dem sich die lichtaufnehmenden und lichtemittierenden Elemente auf einander entgegengesetzten Seiten der Säule befinden.

3. Detektor nach Anspruch 1 oder 2, bei dem bei der Messung die von der Grenzfläche reflektierten Lichtstrahlen durch die Säule hindurchwandern und aus der Säule teilweise von der Seite der Säule her und teilweise von der Oberfläche der Säule her heraustreten.

4. Detektor nach Anspruch 1, 2 oder 3, bei dem sich ein transparenter Füllstoff zum Füllen zwischen dem lichtemittierenden Element und der Säule sowie auch zwischen dem lichtaufnehmenden Element und der Säule befindet, wobei der Brechungsindex des Füllstoffs entsprechend zu dem der Säule ausgewählt wird.

5. Detektor nach einem der vorhergehenden Ansprüche, mit einem transparenten Füllstoff, der sich zum Füllen zwischen dem lichtemittierenden Element und der Säule und gleichzeitig zum Füllen zwischen dem lichtaufnehmenden Element und der Säule befindet, wobei die Höhen- und Durchmesserabmessungen der Säule sowie die vertikale Position des lichtaufnehmenden Elements so gewählt werden, daß die Lichtstrahlen von dem lichtemittierenden Element auf einer Seite der Säule durch den transparenten Füllstoff derart eindringen, daß sie auf der Grenzfläche einfallen, wobei die Lichtstrahlen, die auf der Grenzfläche in einem Winkel einfallen, der größer als ein kritischer Winkel ist, von der Grenzfläche total reflektiert werden und so durch die Säule verlaufen, daß sie teilweise aus der anderen Seite der Säule und teilweise aus einer Oberfläche der Säule derart heraustreten, daß sie auf dem lichtaufnehmenden Element auftreffen, um so eine Ausgangsleistung entsprechend der Intensität der darauf auftreffenden Lichtstrahlen zu erzeugen.

6. Detektor nach Anspruch 5, bei dem der transparente flüssige Füllstoff einen niedrigeren Brechungsindex als die Säule aufweist, wobei alle Lichtstrahlen, die auf der Grenzfläche mit einem mehr als kritischen Winkel einfallen, aus der anderen Seite der Säule heraustreten können.

7. Detektor nach Anspruch 5 oder 6, der eine Haltevorrichtung zum Stützen der Säule umfaßt.

## Revendications

1. Détecteur de rapport de mélange de liquides comportant:

une colonne optiquement transparente, possédant une surface inférieure qui, en utilisation, se trouve en contact avec un liquide, et forme une interface entre le liquide et la surface inférieure de la colonne;

des éléments d'émission de lumière et de réception de lumière disposés autour de la colonne, de telle sorte qu'en utilisation, des trajets optiques sont formés depuis l'élément émetteur de lumière, passant dans la colonne, sur l'interface, émergeant de la colonne et vers l'élément récepteur de lumière, qui produit un signal de sortie selon l'intensité des faisceaux lumineux le frappant; caractérisé en ce que la surface d'émission de lumière de l'élément émetteur de lumière et la surface de réception de lumière de l'élément récepteur de lumière sont sensiblement perpendiculaires à la limite.

2. Détecteur de rapport de mélange de liquides selon la revendication 1, dans lequel les éléments de réception de lumière et d'émission de lumière sont disposés sur des côtés opposés de la colonne.

3. Détecteur de rapport de mélange de liquides selon la revendication 1 ou 2, dans lequel, en utilisation, les faisceaux lumineux réfléchis par l'interface traversent la colonne et quittent la colonne partiellement depuis le côté de la colonne, et partiellement depuis la surface supérieure de la colonne.

4. Détecteur de rapport de mélange de liquides selon la revendication 1, 2 ou 3, dans lequel une charge transparente est disposée pour remplir l'espace entre l'élément d'émission de lumière et la colonne, et également l'espace entre l'élément de réception de lumière et la colonne, l'indice de réfraction de la charge étant choisi en relation avec celui de la colonne.

5. Détecteur de rapport de mélange de liquides selon l'une quelconque des revendications précédentes, comportant en outre: une charge transparente disposée pour remplir l'espace entre l'élément d'émission de lumière et la colonne, et simultanément, remplir l'espace entre l'élément de réception de lumière et la colonne; la hauteur et le diamètre de la colonne, ainsi que la position verticale de l'élément de réception de lumière étant choisis de telle sorte que des faisceaux lumineux provenant de l'élément d'émission de lumière pénètrent d'un côté de la colonne, traversent la charge transparente et frappent l'interface, les faisceaux lumineux frappant l'interface selon un angle supérieur à un angle critique étant totalement réfléchis par l'interface, progressant à travers la colonne de manière à émerger partiellement de l'autre côté de la colonne, et partiellement d'une surface supérieure de la colonne pour frapper l'élément de réception de lumière de manière à produire un signal de sortie selon l'intensité des faisceaux lumineux le frappant.

6. Détecteur de rapport de mélange de liquides selon la revendication 5, la charge liquide transparente présentant un indice de réfraction inférieur à celui de la colonne, tandis que tous les faisceaux lumineux frappant l'interface selon un angle supérieur à un angle critique sont aptes à émerger de l'autre côté de la colonne.

7. Détecteur de rapport de mélange de liquides selon la revendication 5 ou 6, comprenant un support afin de supporter la colonne.

# Fig. 1

# Fig. 2

702

# Fig. 3

702A

# Fig. 4

# Fig. 5a

EP 0 370 807 B1

Fig. 5

D

400

300 210

200

~110~

11

Fig. 6

## Fig. 7

## Fig. 8

Fig. 9